## Europäisches Patentamt

## European Patent Office

## Office européen des brevets

(19)

(11) Publication number: **0 340 177**
**A2**

(12) # EUROPEAN PATENT APPLICATION

(21) Application number: **89830109.8**

(22) Date of filing: **08.03.89**

(51) Int. Cl.⁴: **B 09 B 3/00**

(30) Priority: **14.03.88 IT 8620188**

(43) Date of publication of application:
**02.11.89 Bulletin 89/44**

(84) Designated Contracting States:
**AT BE CH DE ES FR GB GR IT LI LU NL SE**

(71) Applicant: **Campo, Liborio**
**Via Montegrappa N 58**
**I-91011 Alcamo (TP) (IT)**

(72) Inventor: **Campo, Liborio**
**Via Montegrappa N 58**
**I-91011 Alcamo (TP) (IT)**

(54) Continous cycle compactor tunnel with a circulating forced air forechambre for getting off solid urban waste materials biodegradable and for selecting those no biodegradable but recycling.

(57) The tunnel is made by a caged steel sheet; whose dimention is: m.100 x 6 x 6, with a bee nest frame and IPE beams (see fig.1 and 2). It is closed by a moving door at one side (see fig.4) having a counterbalance. As soon as the door opens, there will be installed two mushers (see fig.6) at the loopholes base of the tunnel side (see fig.7) in a below recipient (see fig.22), so doing the reaping of the percolate drain is to be poured inside of an outside pool (see fig.3).The moving opposit wall has a particular form (see fig.9) and it runs on a two rails, in the middle of the above mentioned wall whereas a hydraulic cylinder is anchored (see fig.12) outside, permitting the moving wall to forward (see fig.9). Next to the front face, at the tunnel base, there is the circulating forced air forechambre (see fig.13) in a semicylinder form,made with inox steel sheet, having inside of it some support bars in a circular semicrown form. They are intervalled with some ventilators (see fig.17). On the upper tunnel face, parallely to the forechambre, there are two inox perfored pipes distant from each other,whereas the lying percolate will periodically be put inside of the external pool. On the upper face there are two enterning mouths (see fig.15) for the coming in of the air and yet, for the waste materials (see fig.20). On the same wall, there are the discharge pipes (see fig.18) having at the base some filters capable to eliminate bad shent (see fig.19). The tunnel itself can be lifted up m. 2 from the sloping soil and m. 1 from the final side.

**Description**

## CONTINOUS CYCLE COMPACTOR TUNNEL WITH A CIRCULATING FORCED AIR FORECHAMBRE FOR GETTING OFF SOLID URBAN WASTE MATERIALS BIODEGRADABLE AND FOR SELECTING THOSE NON BIODEGRADABLE BUT RECYCLING.

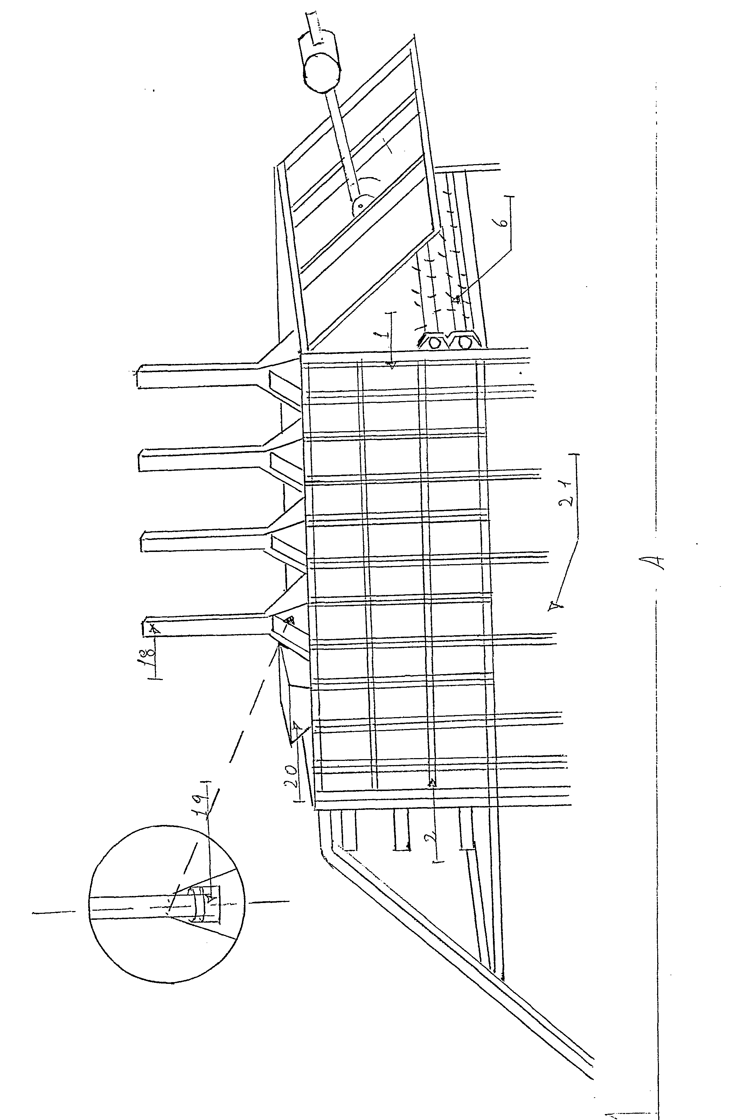

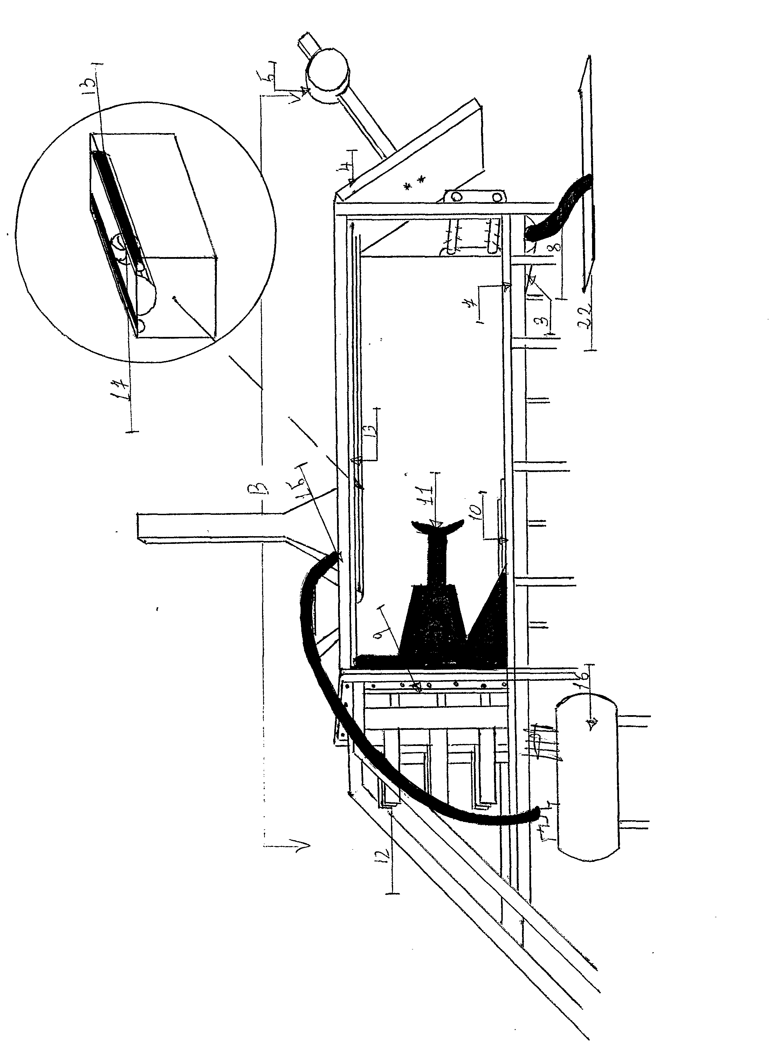

The invention is concerning to a technical system and also to a compactor tunnel at a continuous cycle, made in steel sheet whose variable dimension is: m. 100 x 6 x 6, capable to contain waste solid urban materials in some closed but ventilating ambient, permitting to eliminate them in a natural system without defining any ambient and in the meantime recycling what is no biodegradable. The inventions was studied in order to facilitate the circulating forced air forechambre. It consists of a semicylinder having an encloded lenght which goes from the great extension of the moving wall up to the level base with some loopholes to recuperate the percolate. The lateral wall of a semicylinder is composed of some inox steel bars distant from one another 5 mm. The semicylinder bases have a semicircle form and inside, at a distance of 1000 mm. from one another, there are some circular semicrowns which serve as a support to the inox steel bars which are soldered to the major circumference at the extremity and at all the intermediate semicrowons. Some ventilators are also installed and intervalled from one another inside of the body itself at the tunnel upper fase, parallely to the forechambre where there are some inox perfored pipes distant from one another and whereas will be periodically put a laying percolate into the outside pool. Inside of the forechambre, there will be put in, by a mouth enterning, situated on a parallelepiped superior face, a compressing air, produced by an adjacent compressor. The invention was related also for a compressing moving wall, having a particolar form (see fig.9). It is a single kind of machine, not to be compared with a now -a- days modern technological ones for the simple reason that a machine like that is unknown so far. Actually the waste materials problems are only known for machinaries capable to select biodegradable waste materials but not for those which are not and only today, these waste materials, can be picked and reutilizes as fertilizers instead of letting them lay in discharges. The purpose of the invention is to contain waste urban solid materials in closed but ventilating ambients without defining them and in the meantime re-cycling all that is biogas in order to produce energy. This is possible by closing the appropriate discharges which in other condition, they only served to eliminate waste materials in an aerobic way. The advantage obtained through this invention is essentially consisting to partially eliminate biodegradable material in an aerobic way evoiding methane gas formation, thanks to the circulating forced air inside of the forechambre and also for those waste materials which are no biodegradable particularly plastic materials which would considerable increase the surface support of biodegradable materials and would remarcably accelerate the decomposition process and facilitate also by the percolate in order to moisten the mass. Thanks also to the circulating air inside of the tunnel, these waste materials can be eliminated in an aerobic way, only leaving inside of the tunnel a little part of those which are biodegradable waste materials to be used as manuring.The no organic material will considerable be concentrated and make a more simple mechanized solution needed for being re-cycled as biodegradable material. This operation would facilitate either the plastic recovery, to be sent to industries for recycling and resolving the pollution problems, or for recovering glass, storage battery iron etc. The invention,showed on the draw represents the execution way of that. Draw "A" is the perspective part, draw "B" represents in a small scale, the machine section. The pictures represent continuous cycle compactor tunnel, having a storage function of urban solid waste materials. The tunnel has got a parallelepiped form whose variable dimention is 100 x 6 x 6 m., it is made in steel sheet (see fig.1) and caged at bee nest and framed whith some IPE beams (see fig.2) so that, the internal pression should not deform the tunnel itself. On the two parallelepiped faces, having a less surface, there is a moving door on the side of them (see fig.4) which closes the tunnel by one or more counterbalances (see fig.5), keeping them closed for as long as the waste material pression is such to win the counterbalance resistance, permitting the door to automatically open. It is to be underlined that the counterbalance resistance would be won if only the tunnel had no more capability to contain waste materials. On the other face,there is the moving wall (see fig.9). Once that the automatic opening door is on, there will be installed two mushers (see fig.6) capable to mechanically select solid waste materials while the percolate drain, comes out from the loopholes of the tunnel base (see fig.7), and in the same time, it will pour (see fig.3) into the outside pool tunnel. The two recipient (see fig.3 and 22) are connected by a pipe (see fig.8). Opposit to the front side, there is situated a moving wall with a particular form (see fig.9) running along two rails (se fig.10) from the middle of which there is a hidraulic cylinder, it has the same lenght of the moving wall plus a frustum of cone (see fig.11) inserted inside of it which, at the end of the run, slips out creating a pression in the middle of the tunnel. The purpose of that is to provocate some disassemby inside of the tunnel and favouring the mixing of mass. The moving wall advancing is obtained by a hidraulic cylinder pression (see fig.12) anchored at the external of the tunnel, in side of which there is a parallelepiped form forechambre, opposit to the tunnel face base, for the circulating forced air (see fig.13). It is a matter of semicylinder having an encloded lenght from the moving wall extention (see fig.9) to the level base and yet, there are some loophols in it (see fig.7), whose composition is of inox steel bars, distant from one another 5 mm. The semicylinder bases have a semicrcle form (see fig.14) and inside of them at a distance of 1000 mm. from each other, there are some circular semicrowns to support the inox steel bars, soldered to the major semicircumference of the semicrowns. There are some ventilators inside and distant from one another. On the superior front of the tunnel, parallely to the forechambre, there are some perfored inox pipes, distant from one another whereas there will periodically be poured the percolate which is laying in the outside pool. The percolate comes out from the pipe holes to moisten the mass and it helps the decomposition process of the organic material and also to eliminate part of it in an aerobic way to free the percolate itself. Inside of the forechambre, there will be compressed some air through the mouth entrance (see fig.15) supplied by a compressor (see fig.16). The ventilators, inside of the forechambre, have the function to operate without creating any whirl (see fig.17). Outside, opposit to the front face of the parallelepiped base there are some discharge pipes (see fig.18) distant from the tunnel, whose height is 20 m. There are some special filters for reducing the bad shent from the discharge (see fig.19). One the same surface, there are some mouth, distant from one another (see fig.20) to help the total filling up of the tunnel through all but last one mouth which remains open. So that, acting the moving wall the waste materials can be compressed, being inside of the tunnel other waste material, utilizing only the last mouth, by pressing and filling the tunnel for as much as possible. As soon a the tunnel is filled up, a moving door opens itself (see fig.4) and two suitable brushes will be installed (see fig.6) to facilitate a mechanized selection of the out goin of waste materials, residual part of biodegradable and also those no biodegradable inside of the tunnel. The tunnel is lifted from the soil on its slop side 2 m. and by the end part of it 1 m. (see fig. 21).

**Claims**

RIGHT OF PRIORITY

It is an ecologic machine made to eliminate some urban solid waste materials, assembled in a caged tunnel, in a closed ambient whereas they will be stored (see fig.1 and 2), by a forced circulating air (see fig. 3) capable to ventilate them inside of the tunnel, whose technical system is unknown so far. At the upper external part of the tunnel, there are some filters (see fig.19). To eliminate the aerobic shent of the organic waste materials, there is a fitted moving wall with aparticular form, capable to compress waste materials (see fig.9) whose volume will be reduced on its opposit side (see fig.4) and that only when the tunnel does not accept them anymore. Besides, when last door opens, there will be installed other mushers (see fig.6) to facilitate the mechanical selection of the waste materials. At the end side of the tunnel base, there are some loopholes (see fig.7) which permit to convoy the percolates in a below container (see fig.22) to be poured again inside of an adjacent pool (see fig.3).

EP 0 340 177 A2